Europäisches Patentamt

European Patent Office

Office européen des brevets

(19)

(11) **EP 0 515 209 B1**

(12) **EUROPEAN PATENT SPECIFICATION**

(45) Date of publication and mention
of the grant of the patent:
**23.12.1998 Bulletin 1998/52**

(51) Int Cl.6: **G06F 9/44**, G06F 7/60

(21) Application number: **92304666.8**

(22) Date of filing: **22.05.1992**

(54) **Method and apparatus for regulating membership functions and fuzzy inference system**

Verfahren und Vorrichtung zur Regulierung von Zugehörigkeitsfunktionen und ein
Fuzzy-Inferenzsystem

Procédé et dispositif pour le réglage de fonctions d'appartenance et un système d'inférence floue

(84) Designated Contracting States:
**DE GB**

(30) Priority: **23.05.1991 JP 118344/91**

(43) Date of publication of application:
**25.11.1992 Bulletin 1992/48**

(73) Proprietor: **Hitachi, Ltd.**
**Chiyoda-ku, Tokyo 101 (JP)**

(72) Inventors:
• **Omori, Katsumi, Chishinryo B207**
**Hitachi-shi (JP)**
• **Nakano, Toshihiko, Tenjin Apato B305**
**Hitachi-shi (JP)**

(74) Representative: **Calderbank, Thomas Roger et al**
**MEWBURN ELLIS**
**York House**
**23 Kingsway**
**London WC2B 6HP (GB)**

(56) References cited:
• **PATENT ABSTRACTS OF JAPAN vol. 15, no. 71
(P-1168)19 February 1991 & JP-A-02 292 602
( NKK CORP. ) 4 December 1990**
• **PATENT ABSTRACTS OF JAPAN vol. 14, no. 298
(P-1068)27 June 1990 & JP-A-02 093 940
( OMRON TATEISI ELECTRON CO. ) 4 April 1990**
• **PATENT ABSTRACTS OF JAPAN vol. 16, no. 345
(P-1392)27 July 1992 & JP-A-41 04 302 ( OMRON
CORP. ) 6 April 1992**
• **INSPEC Database Institute of Electrical
Engineers LONDON, GB Y. KAJITANI et al: 'An
automatic fuzzy modeling with constraints of
membership functions and a model
determination of neuro and fuzzy model by
plural performance indices' Accession number
4418182**

**Description**

The present invention relates to a method and an apparatus for regulating membership functions and a fuzzy inference system, or more in particular to an automatic regulation function of membership functions utilizing the user knowledge about the style of a membership function.

In recent years, fuzzy inference has been increasingly applied to real systems. Fuzzy inference is a method by which a subjective ambiguous or linguistic knowledge of experts against an object system of inference are expressed by a fuzzy rule and membership functions, and an output value is inferred from the particular knowledge and an input value (generally, measurable) to the object system. For more detailed information on fuzzy inference, see "Fuzzy Control" by Michio Sugano, published from Nikkan Kogyo Shimbun-Sha.

The feature of fuzzy inference lies in that a human sensory or linguistic knowledge such as "if an input value is large, an output value is decreased" is capable of being expressed as a fuzzy rule of "if-then" form as shown below,

"if" an input value is large, "then" an output is decreased.

In spite of the easy rule description of fuzzy inference, this regulation often requires a period of time as long as two or three years, thus posing the bottleneck to the system construction. In order to obviate this problem, means has so far been suggested for regulating membership functions automatically as described below.

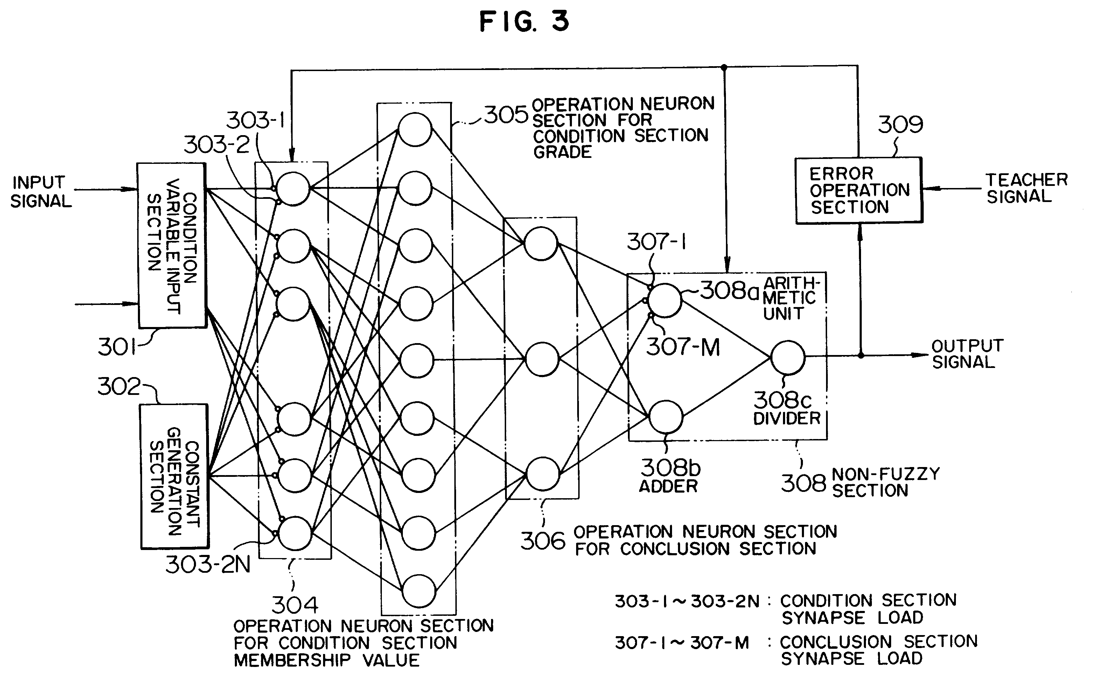

In "Fuzzy Control System of Artifical Neural Network Type" disclosed by JP-A-2-292602, membership functions are automatically regulated by use of a neural network as shown in Fig.3. Specifically, a membership function for the condition section is set in a neuron section 304, and that for the conclusion section in a neuron section 306 in advance, so that an input value of a teacher data is applied from a condition variable input section 301 for conducting fuzzy inference. An error operating section 309 determines an error between an output value of inference result and a teacher data output value, and the synapse load (303-1 to 303-2n) inputted to the neuron section and the synapse load (307-1 to 307-m) outputted from the neuron section 306 are regulated repeatedly in such a manner as to minimize the error. A change in the synapse load of the membership function neuron 304 for the condition section corresponds to enlargement/compression along abscissa or lateral movement of the membership function for the condition section. Also, a change in the synapse load of the membership function neuron 306 for the conclusion section is in correspondence with lateral movement of the membership function for the conclusion section along abscissa.

As will be seen from these cases, the conventional method of automatic regulation of membership functions is solely based on minimizing the error between a teacher data and an inference result.

The problem of the above-mentioned prior art systems is that the teacher data providing a reference for regulation is nothing but an input-output data and contains no information specifying the style and position of a membership directly. The style (such as a triangle or the like) of an initialized membership function, on the other hand, in spite of the fact that it reflects the empirical knowledge of the user, serves merely as an initial data and fails to predict or limit the degree of enlargement/compression or lateral movement along abscissa by regulation.

As explained above, the conventional methods of regulating the membership function is incapable of expressly setting the knowledge and demand of the user on the specification of a membership function and regulating while limiting the position and style thereof, thereby leading to the following problems:

First, automatic regulation often results in the regulation to an inappropriate membership function departing considerably from the user intuition or prediction. In such a case, the membership function is required to be manually re-regulated, thus making automatic regulation meaningless.

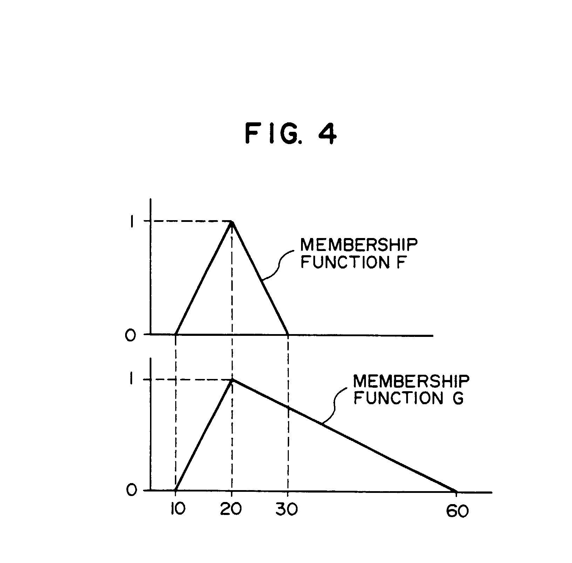

Further, if a teacher data is insufficient or unilateral, a satisfactory result is given for the teacher data but not for the other data in what is called the "overfitting" phenomenon. Consider F and G shown in Fig.4 as membership functions for a proposition "Temperature is approximately 20°C" (F is assumed to be an ideal membership function). F and G are quite different in grade for above 20°C but has the same grade for temperatures below 20°C. As a result, if a teacher data for only below 20°C is given, the use of F or G as a membeship function leads to exactly the same result of inference. Since a data for above 20°C is also inputted actually, however, the inference result using a membership function G contains a considerable error. In such a case, if a condition like "lateral symmetry" could be designated for a membership function, there would be no problem. Since it is impossible to state such a constraint in the conventional methods of automatic regulation, however, the membership function may approach G but not F.

Also, all membership functions are regulated simultaneously according to the prior art. As a result, the anticedent and conclusion sections of the fuzzy rule contain many variables (subject names described later), and there exist many propositions for each variable. In this way, a system using a multiplicity of membership functions requires correlated regulation, thus taking a long time for regulation.

An object of the present invention is to provide a method and an apparatus for automatic regulation of membership functions which overcomes the above-mentioned problems of the prior art and is capable of accurate regulation within a short time.

Another object of the present invention is to provide a fuzzy inference system comprising automatic regulation means for regulating membership functions using teacher data accumulated on-line.

The above and other objects, features and advantages will be made apparent by the detailed description below.

In the method, apparatus for automatically regulating membership functions according to the present invention as set out in claims 1 and 16 respectively the knowledge and demand of the user are set as a constraint on regulation, and membership functions are regulated while maintaining the particular constraint.

The knowledge and demand of the user relating to the membership functions providing the basis of the method and of the apparatus according to present invention will be explained. To state the conclusion first, as far as the qualitative expression (called the proposition) required for description of an object system by fuzzy inference is known, the user never fails to possess a certain degree of knowledge and demand relating to the position and style of a corresponding membership function.

An example of such knowledge is on a geometic feature of a membership function. Assume, for example, that three propositions defined relating to the modeling of "temperature" include "temperature is low", "temperature is medium" and "temperature is high", for instance, it is natural that the membership function "temperature is low" be higher in grade, the lower the temperature, and vice versa. As to the proposition "temperature is high", on the other hand, grade should be increased or decreased with temperature. Also, the proposition "temperature is medium" is indicative of the fact that temperature should not be too high or too low. When graphically indicated in a rectangular coordinate system, a membership function must reasonably form a convex pattern. Further, the graph is preferably laterally symmetric because an excessively high or low temperature is not desirable to the same degree.

A study relating to relative positions of membership functions is reported. An arrangement of membership functions including "temperature is low", "temperature is medium" and "temperature is high" in the ascending order of temperature conforms to intuition. If the interpolating ability which is one of the features of the fuzzy inference is to be displayed, adjacent membership functions between "temperature is low" and "temperature is medium" and between "temperature is medium" and "temperature is high" are required to be set in such a manner as to have a superimposed portion.

Further, there may also be a knowledge about the absolute position of a membership function. When the proposition is "temperature is approximately 20 °C", for example, the grade should be maximum when the membership function is "convex". Further, if the proposition "temperature is approximately 10 °C" is also used, the value at the extreme left end of the membership function "temperature is approximately 20 °C" is allowably considered to be limited in a range between 10 °C and 20 °C.

As described above, in an embodiment of the present invention a geometric feature of a membership function is provided by the user knowledge, the value of a specified parameter of a given membership function, the correlation between membership functions and the like are descdribed as constraints, an arrangement is made enabling the user to designate the order of priority of a plurality of constraints and selection of membership functions requiring regulation (no regulation), and that an initialized membership function is regulated with a teacher data as an input while maintaining the constraints set as above.

A method of regulating the membership function according to an embodiment of the present invention can introduce a satisfactory membership function meeting the user knowledge by designating the user knowledge relating to the geometric feature or absolute position or magnitude of a membership function as a constraint. In addition, it is possible to designate a membership function not regulated and a parameter or the order of priority of constraints, thereby remarkably reducing the regulation time length.

A fuzzy inference system according to an embodiment of the present invention is characterized by comprising a function of automatic regulation of a membership function with a constraint settable and the possibility of regulating a membership function while controlling by a constraint using the teacher data (measurement data) accumulated on-line during the system operation. As a consequence, the regulation accuracy can be improved by repeating the learning with on-line data. In addition, the possibility of regulation while limiting the membership function and parameter by constraints permits safe regulation within a range intended and predicted by the user. As a result, on-line regulation is made possible during system operation, thereby considerably reducing the manpower (a long time has so far been required for collecting the teacher data and regulating the membership function) and the length of time required for system construction and rise.

In the drawings:

Fig.1 shows functional blocks of a membership regulation apparatus according to a first embodiment of te present invention;

Fig.2 shows a system configuration with a hardware shown in Fig.1;

Fig.3 shows a conventional configuration of an apparatus for regulating the membership function;

Fig.4 shows styles of two partially similar membership functions for explaining the problems of the prior art;

Figs.5 to 11 are diagrams for explaining a configuration and operation of the first embodiment, in which:

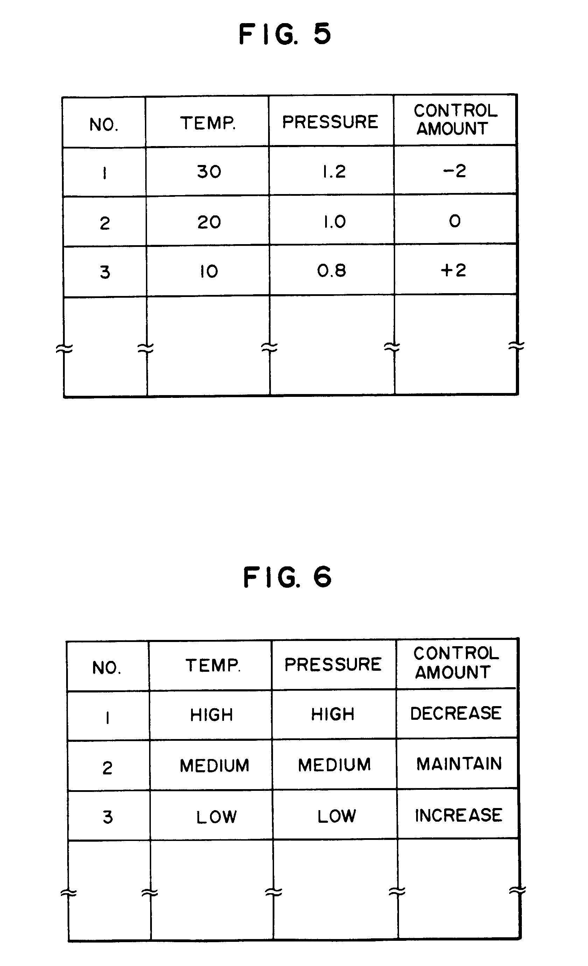

Fig.5 shows an example of teacher data,

Fig.6 shows a form of fuzzy rule storage,

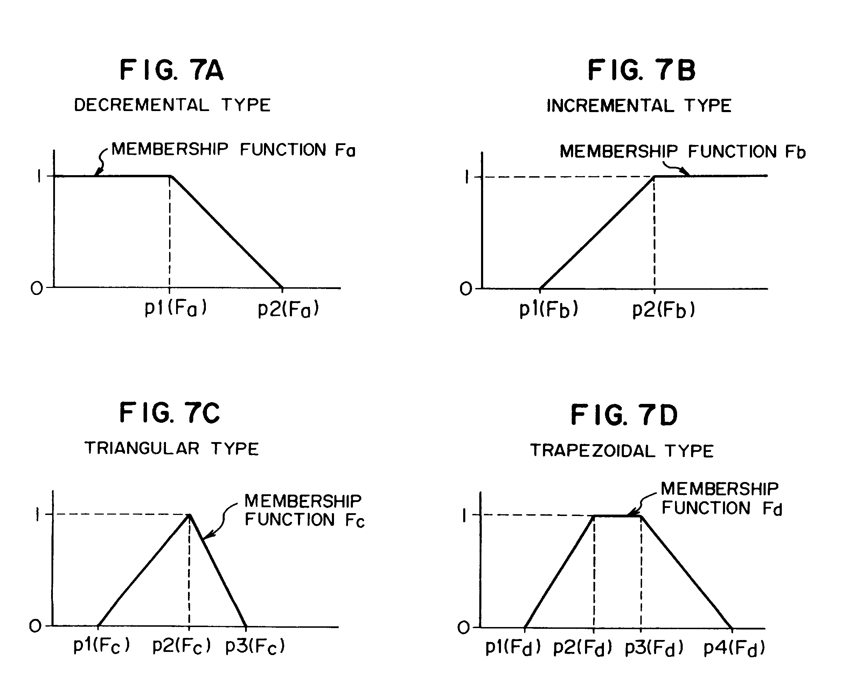

Fig.7A to 7D show an illustrative description of the relationships between a membership function pattern and a parameter,

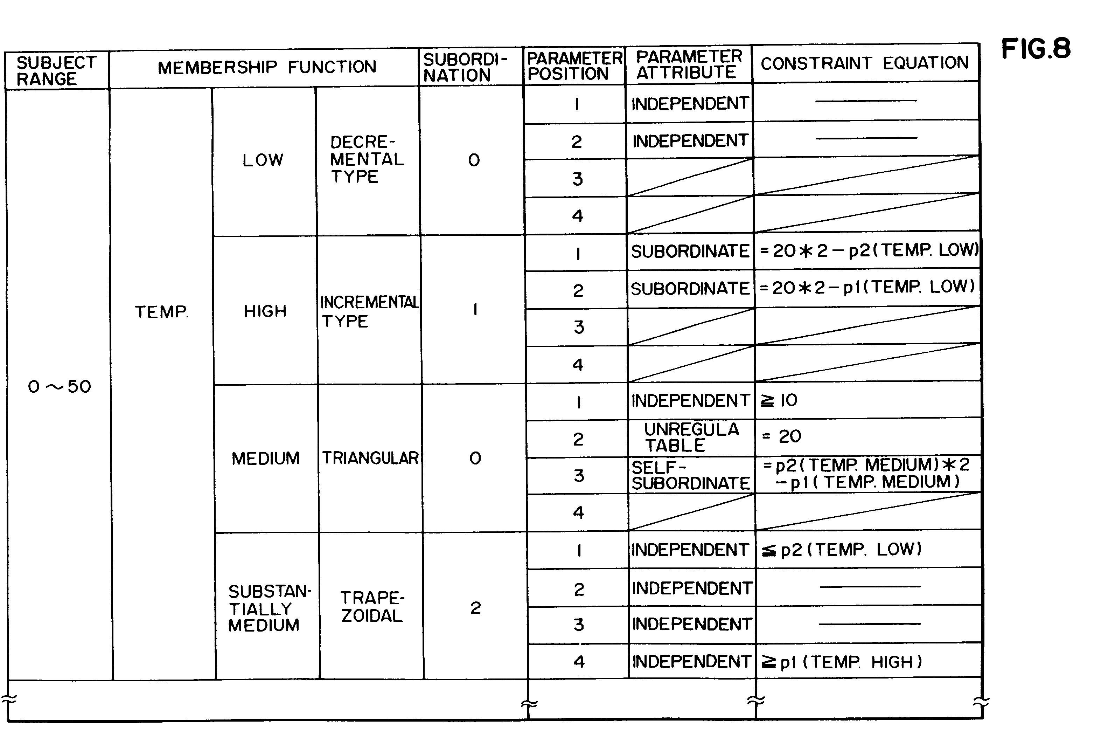

Fig.8 show the contents of a table storing constraints,

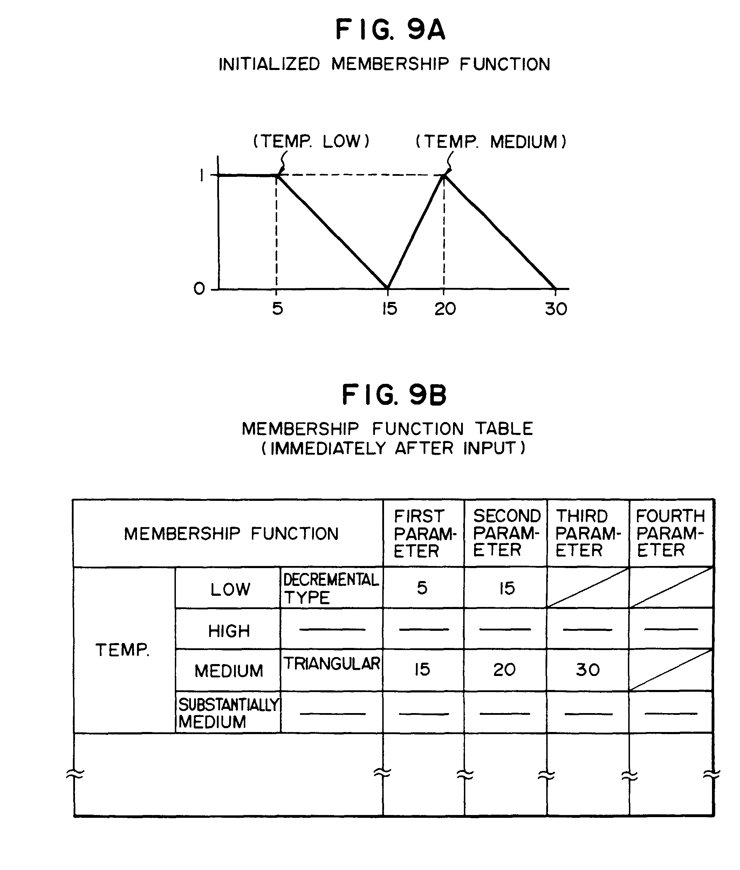

Fig.9A to 9D show a membership function table for initialization and storing parameters,

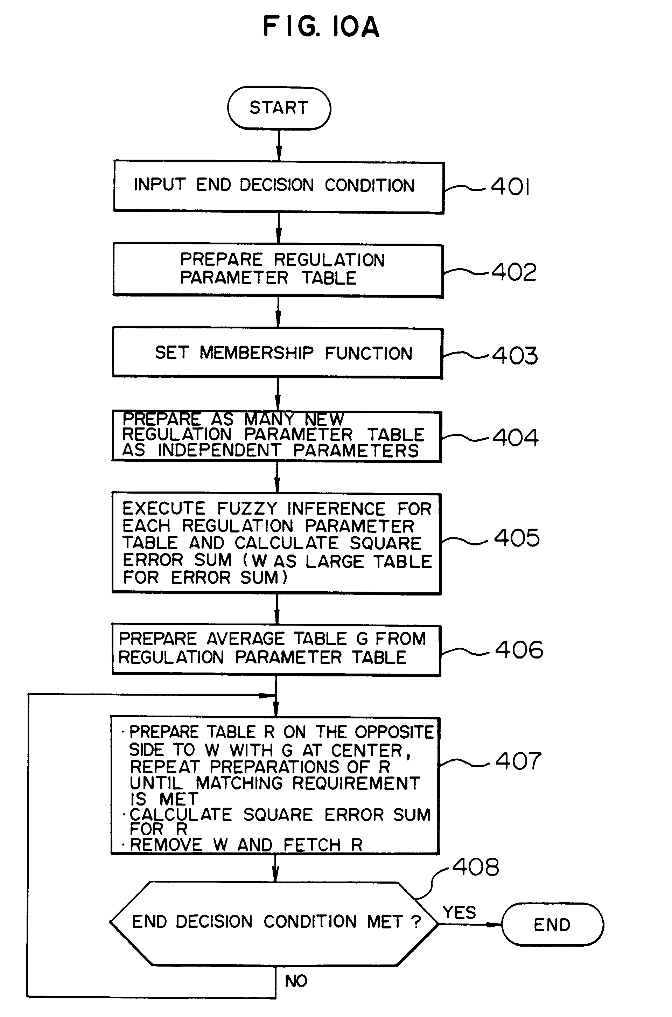

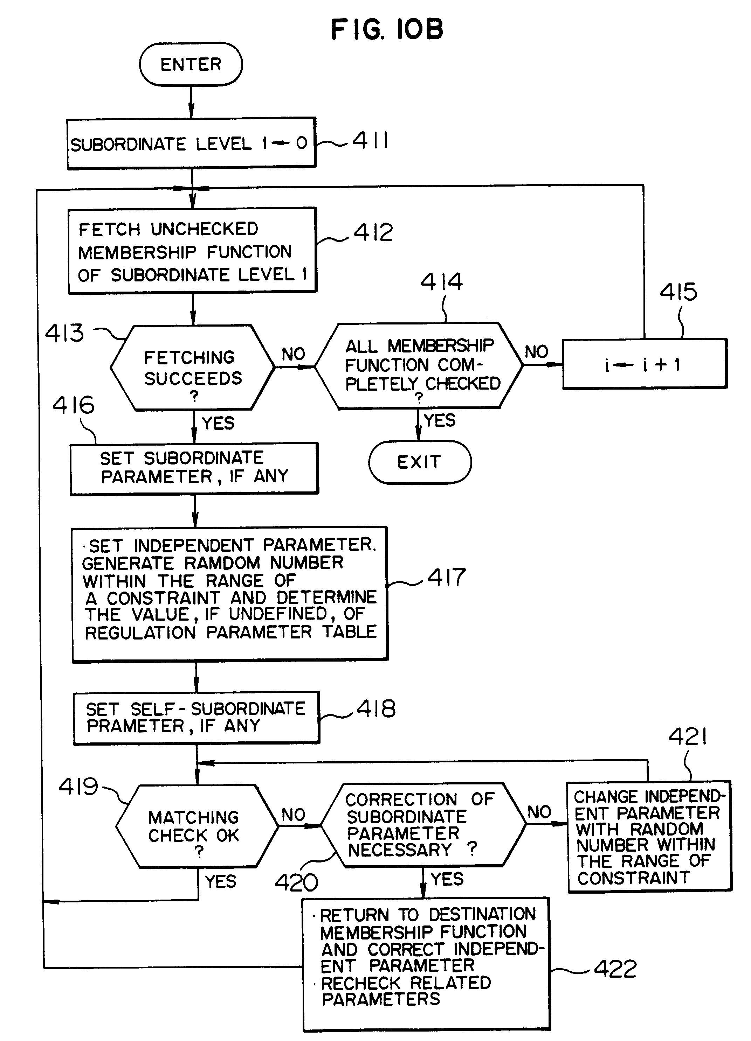

Figs. 10A and 10B show flowcharts showing steps of regulating the membership function, and

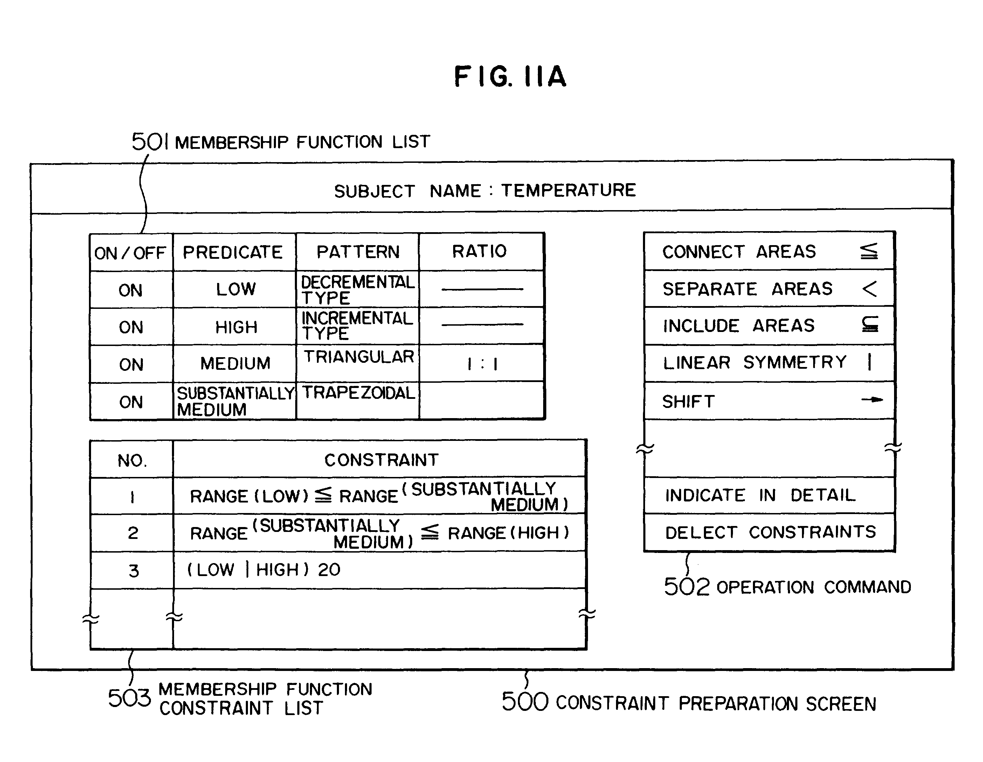

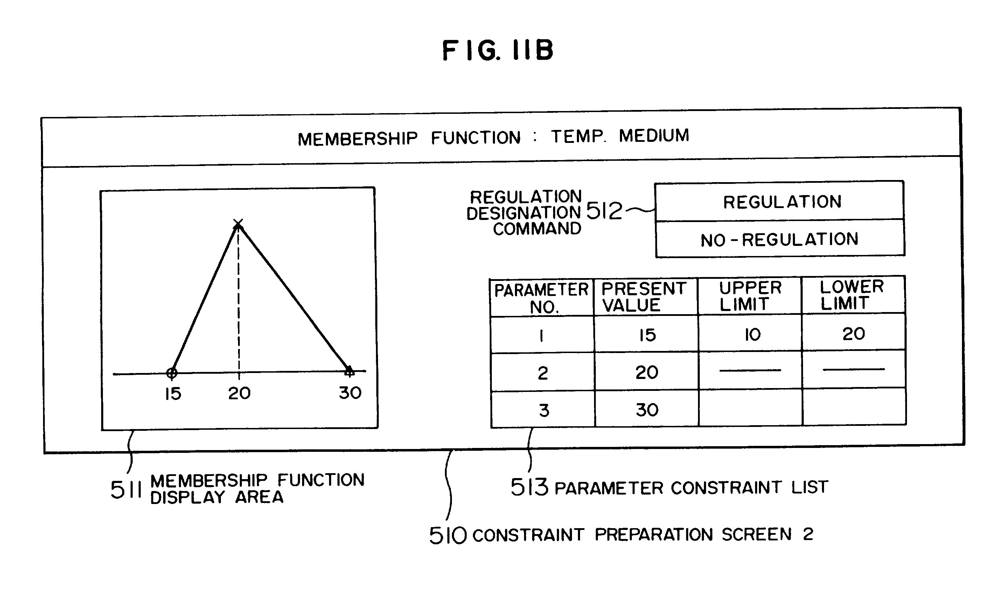

Fig. 11A and 11B show display screens used for preparing constraints on the screen; and

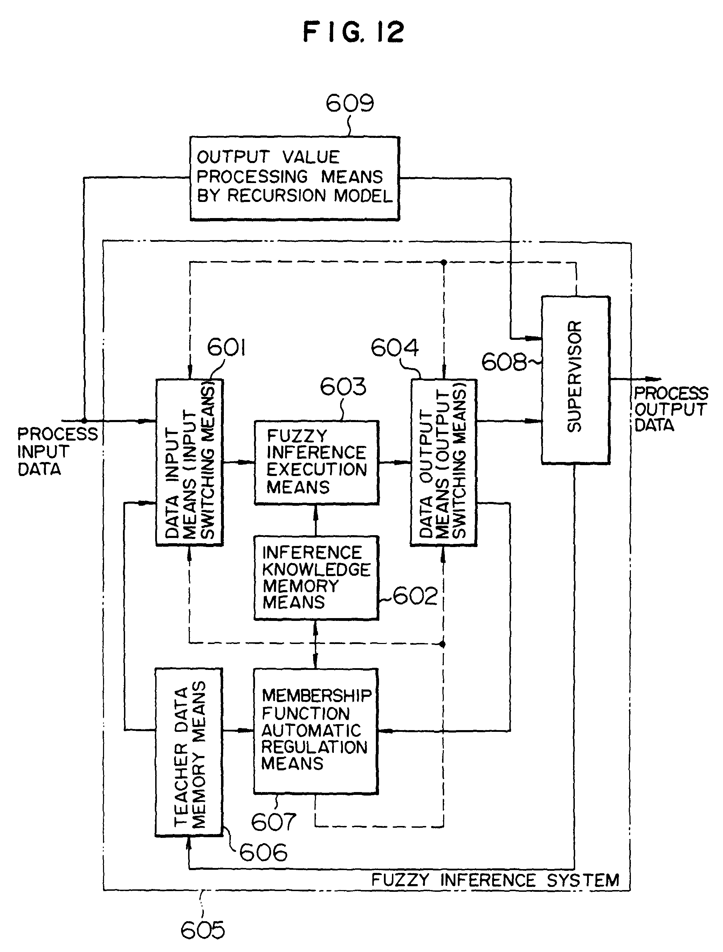

Fig. 12 is a diagram of functional blocks for a fuzzy inference system according to a second embodiment of the present invention.

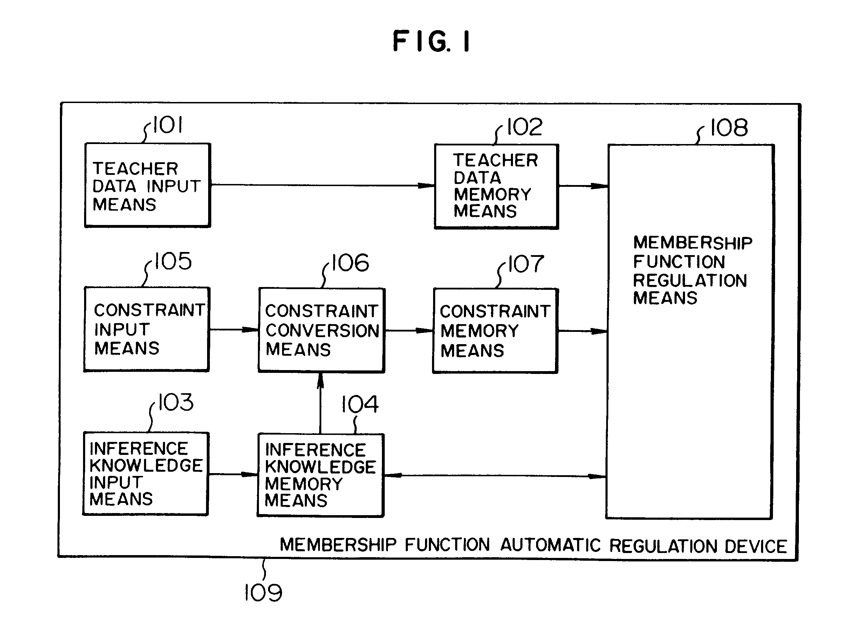

An embodiment of the present invention will be explained in detail with reference to the drawings. A first embodiment of a membership function regulation apparatus according to the present invention is shown in Fig. 1. A membership function automatic regulation apparatus 109 comprises teacher data input means 101 for inputting a teacher data including an input value and an output value for processing an inference object, teacher data memory means 102, inference knowledge input means 103 for inputting a fuzzy rule and an initial data of membership functions, inference knowledge memory means 104, constraint input means 105 for inputting constraints for regulation, constraint conversion means 106 for converting constraints input into a usable form, constraint memory means 107, receiving and inferring an input value of the teacher data, an inference knowledge and constraints and correcting a membership function in such a manner as to minimize the difference between the inference result and a teacher data output value.

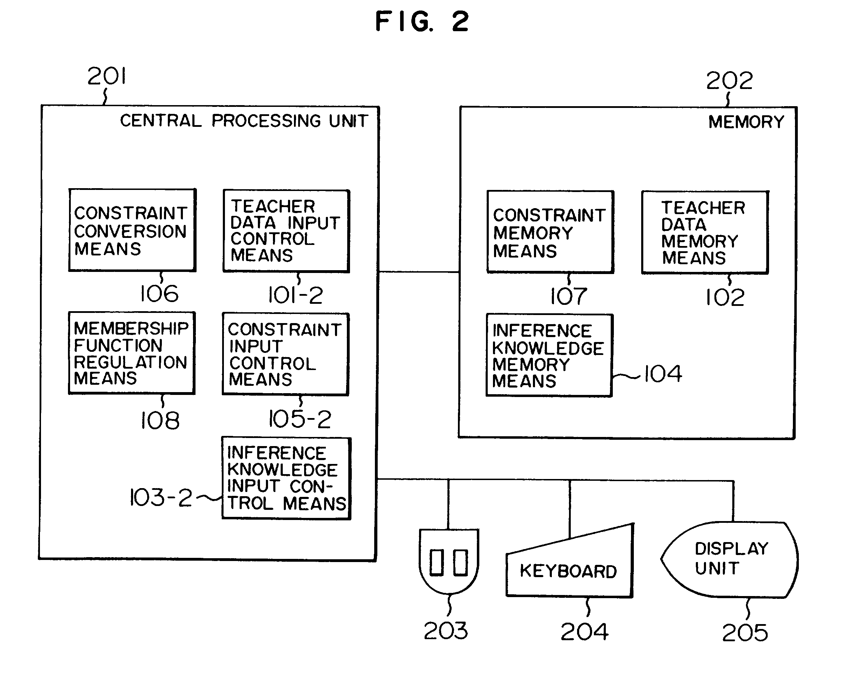

As shown in Fig. 2, the membership function regulation apparatus 109 according to this embodiment makes up a computer system comprising hardware including a central processing unit 201, a memory unit 202, a mouse 203, a keyboard 204 and a display unit 205. The memory unit 202 includes an area (not shown) for storing an operation program for the central processing unit 201 and storage areas functioning as teacher data memory means 102, inference knowlege storage means 104 and constraints storage means 107, respectively. The central processing unit 201 realizes the functions of constraint conversion means 107 and membership function regulation means 108 by executing a program stored in the memory unit 202.

Input units such as the mouse 203 and the keyboard 204, together with the input control means (not shown) for the central processing unit 201, realize the functions of the teacher data input means 101, the inference knowledge input means 103 and the constraints input means 105. Though not shown, the teacher data and the like may alternatively be taken in from an external memory unit or transferred from another device through a bus line. The display unit 205 functions as constraints input means 105 and output means for displaying a membership function pattern during regulation at the same time.

Explanation will be made about the operation of a membership function regulation system according to the present embodiment configured as mentioned above. The user first inputs a teacher data and a fuzzy rule. The teacher data and the fuzzy rule must be known as a prerequisite, and these data are fixed during the regulation of a membership function. Fig.5 shows an example of such a teacher data including a data set having two inputs (temperature and pressure) and one output (control amount). The first teacher data has a control amount of -2 (scale) as an output value against an input value of 30 (°C) in temperature and 1.2 (Pa) in pressure. This teacher data is configured of an input value and a desirable output value in the presence of an object process for inference.

A data shown in Fig. 6 is inputted as a fuzzy rule from the inference knowledge input means 103 and is stored in the inference knowledge memory means 104. The first rule in the drawing is indicative of

"If temperature and pressure are both high, decrease the control amount"

Now, explanation will be made about a method of initialization of a membership function and inputting a constraint. Four representative style patternsas shown by Figs. 7A to 7D of a membership function include (a) decremental type (Fig. 7A), (b) incremental type (Fig. 7B), (c) triangular type, and (d) trapezoidal type (Fig. 7D). The decremental-type membership function Fa has two points (a point where grade begins to decrease from 1, and a point where grade becomes zero) characterizing the style thereof. They are indicated, from left to right, as the first parameter and the second parameter sequentially, and are designated as pl(Fa) and p2(Fa) respectively. A similar designation and expression are used also for the parameters of incremental, triangular and trapezoidal types as shown in Figs. 7B to 7D of the same drawing.

Assume that the user has the knowledge (demand) that a membership function should be set with patterns of decremental, incremental, triangular and trapezoidal types, respectively for the four propositions "temperature is low", "temperature is high", "temperature is medium" and "temperature is substantially medium". In this case, the following inputs are applied from the constraints input means 105:

Decremental type (temperature is low)        (1)

Incremental type (temperature is high)        (2)

Triangular type (temperature is medium)        (3)

Trapezoidal type (temperature is substantially medium)        (4)

Further, assume that in the triangular type of "temperature is medium", it is desired to make regulation in such a manner as to fix the first parameter to 10 to 20, the second parameter to 20, with the membership function of "temperature is medium" in laterally symmetric triangular form. The following inputs are applied:

p1 (temperature is medium) $\leq$ a       (5)
p2 (temperature is medium) = b       (6)
p3 (temperature is medium) = 2 x p2 (temperature is medium) - p1 (temperature is medium)       (7)

where a = 10 and b = 20.

Although this represents constraints in a single membership function, there are also constraints covering a plurality of membership functions. In such a case, too, a constraint may be inputted in a similar form using a parameter. When it is desired to regulate the membership functions in such a manner that "temperature is low" is partially overlaid on "temperature is substantially medium", and "temperature is substantially medium" on "temperature is high", for instance, the following inputs are applied:

p1 (temperature is substantially medium) $\leq$ p2 (temperature is low)       (8)
p2 (temperature is substantially medium) $\leq$ p1 temperature is high)       (9)

Also, when it is desired to regulate "temperature is high" into linear symmetry with "temperature is low" around the ordinate of the value C, the following inputs are applied:

p1 (temperature is high) = 2C - p2 (tempeature is low)       (10)
2 (temperature is high) = 2C - p1 (temperature is low)       (11)

where C = 20 in this example.
In the above-mentioned constraints (1) to (11),
       p2 (temperature is medium) = 20
indicates that the second parameter of "temperature is medium" is fixed to 20 in value and not regulated thereafter. Such a parameter as this will hereinafter be called an "unregulatable parameter".

Also, from (7), (10) and (11), the third parameter of "temperature is medium" and the first and second parameters of "temperature is high" are determined automatically in dependence on the values of the other parameters. These parameters, therefore, will hereinafter be called "subordinate parameters". The third parameter of "temperature is medium", in particular, is dependent on the parameters in the same "temperature is medium", and therefore such a subordinate paraemter as this will be called a "self-subordinate parameter". The remaining parameters, the values of which can be freely set within the range of designated conditions, will be called "independent parameters".

The above-mentioned constraints (1) to (11) are given intentionally by the user. Actually, however, input of systematic constraints is also required for automatic regulation of a membership function. Specifically, a range of value which a subject (such as "temperature") may assume (subject range) is designated. This is essential for the subject of the conclusion section to evaluate the error magnitude relatively. If neither a constraint nor a subject range is designated, a guide indicating the degree of a value required is completely lost in automatic generation of a parameter. For this reason, a subject range is inputted from the constraint input means 105 and stored in the constraints memory means 107.

The constraints (1) to (11) inputted from the constraints input means 105 are applied to the constraints conversion means 106, where the parameter attributes "unregulatable", "independent", "subordinate" and "self-subordinate" are detected. Further, these constraints are converted into a form usable with the membership function regulation means 108, and are stored in the memory means 107 as a constraints table shown in Fig.8. The constraints (1) to (11) in Fig. 8, which are inputted in such a primitive expression as given directly in parameter values, are stored substantially in the form of input.

The constraints conversion means 106 checks also the subordinative relations between membership functions on the basis of the constraints. In Fig.8, a numeral is assigned to each membership function in the column "subordination level". These numerals indicate the degree to which individual membership functions are subordinate to other membership functions. "Temperature is low" lacks a constraint equation and is not subordinate to other membership functions. The subordination level of this parameter, therefore, is determined as zero. "Temperature is medium" contains a constraint equation, but the constraint is closed in "temperature is medium". Therefore, the subordination level of this parameter is also determined as zero. "Temperature is high" cannot be determined before "temperature is low", and therefore the subordination level thereof is decided to be one. In similar fashion, "temperature is substantially medium" is not determinable unless "temperature is low" and "temperature is high" are determined, and therefore the subordination level of this parameter is determined as two. This subordination level provides information required in

5

the regulation stage of membership functions described later.

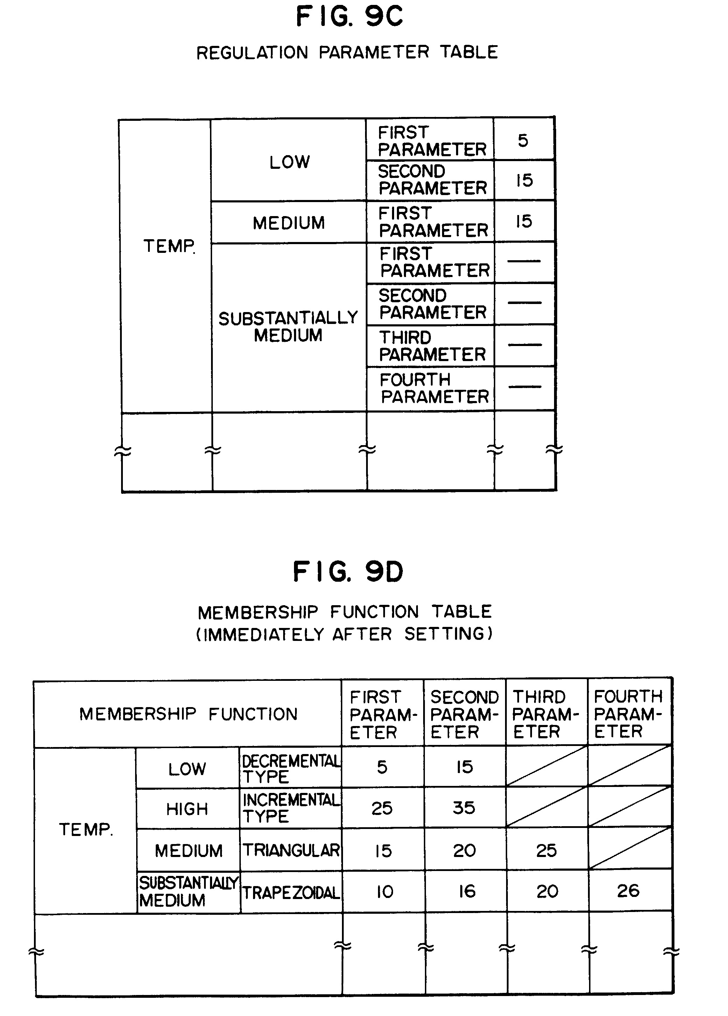

In the above-mentioned input example, the geometric pattern of a membership function is contained in a constraint. As an alternataive, the geometric pattern may be inputted together with a data on the membership function initially inputted from the inference knowledge input means 13. The contents of the membership function table shown in Fig. 9B or Fig. 9D are initialized against the membership functions for "temperature is low" or "temperature is medium" that can be graphically displayed as shown in Fig. 9A. In this case, the input of the constraints (1) to (3) are of course omitted.

In the case where a membership function is initialized, the constraints may be inputted in an expression different from the one described above. In view of the fact that the second parameter for "temperature is medium" in Fig. 9A is set to the value "20" as desired from the beginning, for example, The name of a membership function may be inputted as an argument in place of the constraint (6) as shown below.

CONST(p2(temperature is medium))　　(6')

The membership function by initial input applied from the inference knowledge input means 13 is stored in the inference knowledge memory means 104 in the form of a membership function table. The contents stored in the table are parameter values and names of geometric patterns of membership functions for propositions. In the case shown in Fig. 9B of the drawing, the first parameter value 5 and the second parameter value 15 are inputted and stored together with the geometric pattern name "decremental type" for "temperature is low", and the first parameter value 15, the second parameter value 20 and the third parameter value 30 together with "triangle" for "temperature is medium".

In the case where regulation of four membership functions corresponding to the four propositions shown in Fig. 7A-7D is required, it follows that there exist undefined parameters if inputs are limited to those shown in Fig. 9B. Membership functions not regulated (or not desirably regulated) are required to be defined by the user in advance. Membership functions to be regulated, however, may contain undefined parameters. A subordinate parameter need not be initialized, as it is changed even if initialized by the user. Therefore, the parameters not regulated are checked to see whether they have been initialized or not, and if not, the user is urged to set a parameter value. If a parameter to be regulated is initialized, on the other hand, the particular parameter is checked to see whether it meets the constraints. Those parameters not meeting the constraints are corrected in such a manner as to match with other constraints. When the parameter to be regulated is not initialized, a parameter is generated in such a manner as to meet the constraints. These proceses are peformed as a preparation for regulation in the membership function regulation means 108 described later.

The membership function regulation means 108 is supplied with inputs as required for the membership function table, and to the extent that all the teacher data, fuzzy rules and constraints are prepared, automatically regulates the membership functions in accordance with the flow of steps shown in Fig.10A and 10B. First, step 401 of Fig. 10A applies inputs including a regulation stop error and the number of regulation stops or other boundary values (reference values) required for deciding an end of regulation. Then step 402 collects only independent parameters, that is, parameters to be regulated from the constraints table and prepares a regulation parameter table as shown in Fig. 9C. As far as the user has initialized parameters, parameter values are taken out from a membership function table as shown in Fig.9B in the inference knowledge memory means 104 and sets them in the regulation parameter table. Next, step 403 corrects the contents of the membership function table into such a state shown in Fig. 9D as meets the constraints and permits execution of fuzzy inference by use of a constraints table and a regulation parameter table.

The processing of step 403 is broken down as shown in Fig. 10B. This process will be explained with reference to the contents in the constraints table of Fig. 8 and the regulation parameter table of Fig. 9C.

Parameter values are set and constraints checked for each membership function in the ascending order of subordination level as described above. By so doing, a parameter requiring reference when using a constraint is prevented from remaining undefined.

First, the subordination level i is set to zero in accordance with step 411. According to the constraints table shown in Fig. 8, the membership functions associated with the subordination level of zero are "temperature is low" and "temperature is medium". Step 412 recovers "temperature is low". "Temperature is low" includes two independent parameters, and corresponding parameter values are known to be (5, 15) from the regulation parameter table of Fig. 9C. These values are ones copied from the membership function table at step 402. In step 417, however, the values of the regulation parameter table are unconditionally set in the membership function table.

As a result, all the parameters for "temperature is low" are determined provisionally, and the matching of parameters is checked at step 419. In the process, the constraints shown below are also checked in order to maintain the matching between parameters in addition to the constraints indicated by the user.

Minimum value in subject range $\leq$ Second parameter < Third parameter < Fourth parameter $\leq$ Maximum value of subject range　　(12)

In this case, the range of the subject "temperature" is from 0 to 50. Also, parameters up to the second parameter are involved for "temperature is low" which is of decremental type.

Parameters for "temperature is low" lack a constraint equation, and the values thereof satisfy also the constraint equation (12). Therefore, the constraint check of step 419 is cleared.

Next, in the case of "temperature is medium" representing another subordination level of zero, step 416 determines the second parameter as 20, and step 417 the first parameter as 15 (a value in the regulation parameter table). Then, step 418 determines a self-subordinate third parameter as shown below from the constraint equation (7) and sets it in the membership function table.

$$p3(\text{temperature is medium}) = p2(\text{temperature is medium}) \times 2 - p1(\text{temperature is medium}) = 20 \times 2 - 15 = 25$$

The matching check is naturally satisfied for all the parameters thus set for "temperature is medium".

Now, departing from the membershp functions of subordination level zero, step 415 increments the subordination level to 1, and step 412 recovers "temperature is high". The two subordinate parameters for "temperature is high" are determined using the constraint equation and the parameter values for "temperature is low" that have already been subjected to a matching check. The matching is satisfied also in this case.

$$p1(\text{temperature is high}) = 20 \times 2$$

$$- p2(\text{temperature is low}) = 20 \times 2 - 15 = 25$$

$$p2(\text{temperature is high}) = 20 \times 2$$

$$- p1(\text{temperature is low}) = 20 \times 2 - 5 = 35$$

Finally, parameters are set for "temperature is substantially medium" representing the subordination level of 2. "Temperature is substantially medium" includes four independent parameters, and the values of the regulation parameter table of Fig. 9C are all undefined. Step 417 determines the range of parameter values from the constraints and parameter values before and after them, and generates random numbers in the particular range.

The first parameter is defined as shown below from the above-mentioned constraints.

$$0 = \text{Minimum value in "temperature" range}$$

$$\leq p1(\text{temperature is substantially medium})$$

$$\leq p2(\text{temperature is low}) = 15$$

A value between 0 and 15 is thus generated by a random number or the like. Assuming that 10 is generated, the second parameter is given as

$$10 = p1(\text{temperature is substantially medium})$$

$$< p2(\text{temperature is substantially medium})$$

$$\leq \text{Maximum value in "temperature" range} = 50$$

A value between 10 and 50 is thus generated. The third parameter is determined in similar manner. As regards the fourth parameter, a value is determined in the range defined by

$$\text{Max}\{p2(\text{temperature is substantially medium})\},$$

$$p1(\text{temperature is high})\} \sim \text{Maximum value in}$$

$$\text{"temperature" range} = 50$$

taking the constraint equation into consideration. Parameters for "temperature is substantially medium" can thus be determined in a manner to satisfy the matching. A parameter value thus determined is set in the membership function table and the regulation parameter table.

In the above-mentioned case, the matching check of step 419 succeeds after a single trial. But a matching check may fail. In such a case, step 421 corrects the independent parameter values by the same technique as step 417 mentioned above. The correction of a subordinate parameter value is based on that of a related independent parameter to satisfy the matching requirement. Assuming that the "temperature" range is set between 0 and 30, for example, the second parameter value 35 for "temperature is high", which exceeds the particular range, is required to be reduced below 30. Since the value depends on the first parameter for "temperature is low", however, step 422 changes the first parameter for "temperature is low" in such a manner as to maintain the matching of "temperature is high". A method of such a change consists in generating the first parameter in the form of a random number in a range not disturbing the matching of "temperature is low", determining the second parameter for "temperature is high" in accordance with the contraint equation, and checking the matching of "temperature is high". In the process, the first parameter for "temperature is low" is generated not indefinitely but according to a conditional equation, i.e., the constraint equation (11) in the case under consideration. In other words, in view of the fact that the factor of p1(temperature is low) in

$$p2(temperature\ is\ high) = 20\ x\ 2$$

$$- p1(temperature\ s\ low)$$

is -1, p1(temperature is low) is increased if p2(temperature is high) is to be decreased. Thus, a value larger than the present p1(temperature is low) is generated to check the matching of "temperature is high".

When an independent parameter value has been corrected, parameter values in the regulation parameter table as well as those in the membership function table are changed.

The foregoing is a detailed description of step 403, in which a membershp function table in such a state as to satisfy the constraints and enable the execution of the fuzzy inference and a regulation parameter table coinciding with the contents of the membership function table are generated from the constraints and the membership function initialized by the user.

As will be seen from the foregoing description, according to the present embodiment, a parameter for a membership function to be regulated need not necessarily be initialized by the user. Also, a membership function of which all the parameters are unregulatable is not changed in the operation of step 403.

Next, step 404 prepares as many new regulation parameter tables as the elements (i.e., independent parameters) of a regulation parameter on the basis of an original regulation parameter table. The i-th new regulation parameter table is copied from the original regulation parameter table with only the i-th parameter left undefined according to the same process as in step 403. All the regulation parameter tables generated at step 404 are in a state satisfying the matching requirement.

Step 405 develops a membership function table by use of a constraints table for each regulation parameter table. A fuzzy inference is then executed from the membership function table, the fuzzy rules as shown in Fig.6 stored in the inference knowledge memory means 104 and the teacher data as shown in Fig.5 stored in the teacher data memory means 102, so that a square error sum of an output value of the inference result and that of the teacher data. is determined.

Step 406 Step 406 adds the contents of all the membership function tables by element, and taking an average for each element, prepares a new membership function table G.

Step 407 generates a regulation parameter table R in the direction opposite to W around G on the assumption that W designates a regulation parameter table with the largest square error sum in step 405.

More specifically,

$$R = 2G + W$$

is calculated to determine R for each element. Since the matching requirement is not necessarily met by R, however, the matching of R is checked by a technique similar to step 403. If the matching requirement fails to be met, R is made to approach to G until the matching requirement is satisfied. In the final case where the matching requirement fails to be met even when R is made G, the values of independent parameters are automatically corrected in the same manner as in step 403.

A square error sum is calculated for a membership function table R meeting a new matching requirement, and W having a maximum square error sum is removed from the regulation parameter tables.

The operation of steps 406 to 407 is repeated to reduce the square error sum while meeting a predetermined constraint.

Various probability techniques including Boltzmann machine are known in addition to Simplex method described above as a method for searching for an optimum parameter for a membership function.

According to the present embodiment, a membership function can be automatically regulated with the user knowledge and demand relating to the specification of a membership function as a constraint, thereby making it possible to define a membership function with high accuracy while shortening the regulation time.

In the above explanation, a parameter value is determined in such a manner as to meet all the constraints in step 413 of Fig. 10B. If many complex constraints are designated, however, it takes a long time to search for a parameter value meeting the constraints, often resulting in a failure to find a parameter meeting such constraints. In view of this, an order of priority of constraints is also inputted together with the constraints to attach an order of priority to the particular constraints, and parameters are regulated in such a way as to meet the constraints in the descending order of priority. If required, search for a parameter is facilitated by ignoring constraints low in priority.

Although constraints are inputted in the form of a function equation using a parameter according to the above-mentioned embodiment, a macro expression using a name of membership function may alternatively be inputted as shown in (12) to (16) below without expressly indicating a parameter.

The constraint (6'), for example, designates only the second parameter for "temperature is medium" not to be regulated. If it is desired to make regulation in a manner not to regulate any parameters, however, the following description shall be made:

CONST(temperature is medium)        (13)

The constraint (7) representing a laterally symmetric style is expressed as

Itemperature is mediumI = 1 : 1        (14)

This indicates that the lengths of an incremental section and a decremental section of triangular type are one to one in ratio.

The constraints (8) and (9) indicating the superposition of membership functions are expressed as

Range (temperature is low) $\leq$ Range (temperature is substantially medium)        (15)

Range (temperature is substantially medium) $\leq$ Range (temperature is high)        (16)

where "Range (temperature is low)" represents a section where the grade of the membership function "temperature is low" is larger than zero.

The constraints (10) and (11) indicating a symmetric relation between two membership functions are given as

(temperature is IlowItemperature is high)20        (17)

As understood from comparison between (6) to (11) and (13) to (17), the contents are understood and input is made easier by inputting a constraint in macro form using only a name of membership function. Even when the constraints are inputted in the macro form of (13) to (17), the constraints are converted into a function equation with parameter values specified in (6) to (11) by the constraint conversion means 16 and are stored in the constraint memory means 107 shown in Fig. 8.

The constraint conversion means 106 holds many conversion rules including "When a membership function of decremental type is superimposed at a position to the left of a trapezoidal type, the second parameter of a decremental-type membership function is not less than the first parameter type but not more than the fourth parameter of trapezoidal type". As a result, it is possible to convert constraints like (15) not using any parameter into those using a parameter like (8) by conversion rules and geometric patterns of a membership function obtained with reference to the contstraint table or the membership function table.

Next, a method of inputting a constraint will be explained. A pointing device like a mouse may be used as input means together with a keyboard. Figs. 11A and 11B show an example of screens for preparing constraints. Constraint input control means 105-1 applies information for constraint display and input to a display unit 205 and waits for input from a mouse 203 and a keyboard 204.

A membership function list 501 with "temperature" as a subject name providing a variable of an inference object is displayed on the screen of Fig. 11A. In the "on/off" column, "ON" marked on the button indicates a regulation requirement, and "OFF" no requirement of regulation. When this button is picked by a mouse, the ON/OFF relation is reversed. When "temperature is substantially medium" is changed to "OFF", for instance, "tempeature is substantially medium" is stored as a proposition requiring no regulation at the constraint memory means 107, and four parameter attributes of "temperature is substantially medium" are changed to "unregulatable" in the constraint table of Fig. 8.

The column "ratio", on the other hand, indicates the ratio of length between parameters. When the ratio for "temperature is medium" is set to 1:1, for instance, the column "ratio" of "temperature is medium" is picked and "1:1" is inputted by way of the keyboard 204. The ratio thus inputted is expressed in macro form at the constraint input control means 105-2 and is converted into a primitive constraint (7) by the constraint conversion means 106.

In order to prepare a constraint covernig a plurality of membership functions in macro expression, an operation command 502 is displayed in Fig. 11A. For setting a constraint (15),

RANGE(temperature is low) $\leqq$ RANGE(temperature is substantially medium)

for example, "low" is picked at 501, "area connection $\leqq$" at 502, and "substantially medium" at 501. This series of operations enables the constraint input control means 15-1 to prepare constraints in macro expression and store in the constraint memory means 107.

The constraints thus set are displayed on the screen as a list 503. The contents displayed in the list 503 are an example of constraints covering a plurality of membership functions. When a constraint is to be deleted, a column of a condition to be deleted is picked, followed by picking "delete constraint" of the operation command 502. In the process, a primitive constraint associated with a macro constraint to be deleted is deleted before the macro constraint.

Fig. 11B shows a screen for preparing a constraint relating to parameters for individual membership functions. An example of "temperature is medium" is displayed. This screen is stored in hierarchal configuration with the membership function list of Fig. 11A and is capable of being displayed by picking "medium" at 501, and "indicate in detail" of the operating command 502.

The screen of Fig. 11B graphically displays a membership function to be regulated in a membership function display area 511. Symbol ○ is attached to an independent parameter, Δ to a subordinate parameter, and X to an unregulatable parameter. These parameter symbols permit mouse pick. A point associated with the second parameter of "temperature is medium" is marked with X indicating "unregulatable". If it is desired to change this to "regulatable", symbol X is picked, and also "regulate" is picked from a regulation designation command 512 displayed on the same screen. In response to this mouse operation, the constraint input control means 105-2 changes the second parameter of "temperature is medium" to "independent". As regards a parameter constraint list 513 for setting and displaying the present value and upper and lower limits of each parameter, a column to be set in is picked by mouse and a related value is inputted by way of the keyboard.

In this way, a membership function is displayed graphically and a pointing device like a mouse is used to display a constraint in an easy-to-understand manner while inputting it in simple fashion.

Although the foregoing description deals with geometric patterns of membership functions including decremental, incremental, triangular and trapezoidal types, the same principle can of course be applied with equal effect to other patterns such as bell type.

Now, another embodiment of the present invention will be explained. Fig. 12 shows a configuration of a fuzzy inference system comprising automatic regulation means for membership functions according to the present invention.

A fuzzy inference system 605 comprises an ordinary fuzzy inference device including data input means 601 for fetching a process input data, inference knowledge memory means 602 for storing a fuzzy inference knowledge (fuzzy rules, membership functions) representing a qualitative model of an object process, fuzzy inference execution means 603 for executing a fuzzy inference, and data output means 604 for producing an inference result of the fuzzy inference system as a process output. The fuzzy inference system further comprises teacher data memory means 606 for storing a teacher data (based on observation values) having a set of input and output values of an object process, membership function automatic regulation means 607, and a supervisor 608 for monitoring the output of the fuzzy inference system. The membership function automatic regulation means 606 has stored therein constraints used for regulating the membership functions stored in the inference knowledge memory means 602. These constraints were described with reference to the first embodiment above. In Fig. 12, the solid lines indicate a flow of data, and the dotted lines that of control signals. A hardware configuration of this fuzzy inference system includes a computer system, input-output means and process input-output units similar to the first embodiment described above.

The fuzzy inference system 605 effects a fuzzy inference at the fuzzy inference execution means 603 by use of a process data inputted to the data input means 601 and the inference knowledge of the inference knowledge memory means 602. The result of inference may be directly used as a process output value. In this embodiment, however, a reasonability check is effected by the superviser 608 to check whether the inference result meets a predicted level. This level (reference) is set in advance on the basis of an observation data and user knowledge of the process. If determined as reasonable, the particular inference result makes up an output value of the process.

In the case where an inference result is decided to be inappropriate, however, the supervisor 608 determines a process output value by use of another prediction means. The present embodiment includes output operation means 609 based on a recursion model as prediction means. The supervisor 608 produces an output value of the output operation means 609 as a process output data on the one hand, and stores a set of data including the particular output value and a process input data associated with the particular time point in the teacher data memory means 606 as a teacher data on the other hand. As a result, a process input-output data associated with the decision that an inference result of the fuzzy inference execution means 603 is inappropriate is accumulated on-line as a teacher data.

At the time when the teacher data thus accumulated reaches a predetermined amount, the membership functions in the present system are regulated in the manner mentioned below.

First, the supervisor 608 supplies a control signal to the data input means 601 and the data output means 604, thereby switching the input data destination to the teacher data memory means 606 and the inference result destination to the membership function automatic regulation means 607. The teacher data (input value) of the teacher data memory means 606 is inputted to the data input means to effect inference at the fuzzy inference execution means 603. The inference result is applied from the data output means 604 to the membership function automatic regulation means 66. The regulation means 607 compares the inference result with the teacher data (output value). If the error exceeds a reference value, the parameter value of the membership function is corrected in accordance with a predetermined constraint, thereby repeating regulations. A specific method of regulation is similar to the one mentioned with reference to the first embodiment. Prediction may be effected by the output operation means in parallel to the regulation.

At the end of regulation, the membership function automatic regulation means 607 supplies a control signal to the data input means 601 and the data output means 604. Thus the input data destination is switched to the process input data and the inference result destination to the supervisor 608, thereby restoring an ordinary on-line operation.

According to a fuzzy inference system of the present embodiment, when regulation of the fuzzy inference means is insufficient depending on the process behaviour, related process input-output values are accumulated as a teacher data to permit repeated regulation by membership function regulation means, thereby making possible a regulation with a high learning effect and accuracy. In addition, since the regulation is executed according to constraints based on the user knowledge, there is no danger of the regulation proceeding in an unexpected direction. It is also possible to limit the operation to partial regulation, thereby realizing a simple and efficient regulation. The result is a regulation executable safely in a short time length, thus permiting on-line regulation. Also, an off-line regulation in which the inference operation of the system is suspended during the regulating operation is of course possible. As a consequence, the time and manpower required for system construction and regulation are saved to a consdirable extent.

## Claims

1. A membership function automatic regulation method for executing fuzzy inference by using teacher data including a set of input and output values of an object of inference, an inference rule and a membership function, and for effecting regulation in such a manner that the result of inference approaches the teacher data,
   wherein a constraint of said membership function is set, and the definition data of said membership function is changed while holding the constraint during the regulation.

2. A method of membership function regulation according to Claim 1, wherein said constraint is a data for designating whether regulation is required for each membership function.

3. A method of membership function regulation according to Claim 1 or 2, wherein said constraint designates a geometric style of said membership function and/or a geometric correlationship between a plurality of membership functions.

4. A method of membership function regulation according to Claim 3, wherein when there are a plurality of constraints, the order of priority among said constraints can be designated.

5. A method of membership function regulation according to Claim 3, wherein a constraint specifying a geometric style is a parameter designating a predetermined position for each predetermined pattern of the geometric style.

6. A method of membership function regulation according to Claim 3, wherein a constraint specifying a geometric correlationship is a data designating at least selected one of the superposition, symmetry and sequence of membership functions.

7. A method of membership function regulation according to Claim 5, wherein a membership function is defined by setting the value of said parameter.

8. A method of membership function regulation according to Claim 7, wherein a membership function is regulated by changing the value of said parameter on the basis of a conditional equation representing said constraint with said parameter.

9. A method of membership function regulation according to Claim 8, wherein said parameter includes an independent parameter inputted with data and a subordinate parameter generated according to said independent parameter and said conditional equation.

10. A method of membership function regulation according to Claim 8, comprising means inputted with a macro instruction with a membership function name as an argument for converting said macro instruction into a conditional equation based on said parameter.

11. A method of automatic membership function regulation for executing fuzzy inference according to claim 1, by use of a teacher data having a set of input and output values of an object of inference, an inference rule and a membership function and effecting the regulation in such a manner that the inference result approaches the teacher data, wherein a geometric style of a membership function represented by the correlationship between parameters indicating the type of a geometric pattern and a predetermined position of said pattern is set as a constraint, and when the result of inference based on the membership function already set exceeds a predetermined error, the value of said membership function associated with said parameter is changed and regulated while maintaining said constraint.

12. A membership function automatic regulation apparatus comprising a computer system including an input-output unit (203, 204, 205), said apparatus further comprising input means (601) for teacher data including a set of input and output values of an object process of inference, memory means (602) for storing an inference rule, an initialized membership function and a constraint for regulating said membership function, inference execution means (603) receiving said teacher data for executing fuzzy inference with said inference rule and said membership function, and membership function automatic regulation means (607) for comparing the result of inference (output) of said inference execution means with an output value of said teacher data and regulating the membership function in accordance with said constraint in such a manner as to minimize the error if said error exceeds a reference value.

13. An apparatus for membership function regulation according to Claim 12, further comprising means for setting while displaying on the screen a geometric style of a membership function to be regulated and a parameter for a predetermined position of said geometric style.

14. An apparatus for membership function regulation according to Claim 12, further comprising display means for displaying a membership function table including names of membership functions and geometric patterns and/or a constraint table based on a conditional equation, and display control means for setting and displaying the contents of each table by input from input means and pointing.

15. An apparatus for membership function regulation according to Claim 12, wherein the error of the inference result based on a membership function that has been regulated is repeatedly regulated to such an extent as to decrease below a predetermined value.

16. A membership function automatic regulation apparatus according to claim 12, said apparatus comprising a computer system including a central processing unit (201), a memory unit (202) and an input-output unit (203, 204, 205), wherein:

said memory unit includes a storage area for each of teacher data memory means (102) for storing a teacher data having a set of input and output values on an object process of inference, inference knowledge memory means (104) for storing an inference rule and a membership function, and constraint memory means (107) for storing a constraint indicated by a parameter representing the type of a geometric pattern and a predetermined position of said pattern for controlling the regulation of a membership function, said central processing unit (201) includes the functions of pretreatment means for initializing the membership function in accordance with said constraint, fuzzy inference means supplied with an input value of said teacher data for executing fuzzy inference according to said inference rule and said membership function, and membership function automatic regulation means (108) for comparing the inference output result of said fuzzy inference means with an output value of said teacher data and, when the error exceeds a predetermined value, changing the value of said parameter corresponding to said membership function on the basis of said constraint, and

said input-output unit includes display means capable of setting while displaying on the screen said constraint and said membership function.

17. A fuzzy inference system comprising means for automatically regulating a membership function according to claim 16, said system comprising:

fuzzy inference means (601) for fetching an input data on an object process and effecting fuzzy inference of a process prediction on the basis of a membership function and an inference rule stored, another prediction means (608) for processing a process prediction from said input data without fuzzy inference, output data switching means (604) for producing a fuzzy inference result when said inference result meets a predetermined level, and the prediction result of said another prediction means when said inference result fails to meet said predetermined level, and teacher data memory means (606) for accumulating the prediction result and a process input data as of the particular time point as a set of input data when the prediction result of said another prediction means is outputted;

said system further comprising constraint memory means (606) for storing a constraint for maintaining the style of said membership function under regulation, and membership function automatic regulation means (607) for regulating a data on said membership function in accordance with said constraint in such a manner as to minimize the error between the inference result of said fuzzy inference means and said teacher data when the input of said fuzzy inference is switched from said process data to said teacher data by the input data switching means (601).

## Patentansprüche

1. Verfahren zur automatischen Einstellung einer Zugehörigkeitsfunktion, um unter Verwendung von Lerndaten mit einem Satz Eingangs- und Ausgangswerten eines Objekts einer Folgerung, einer Folgerungsregel und einer Zugehörigkeitsfunktion eine Fuzzyfolgerung durchzuführen und um eine Einstellung so zu bewirken, daß sich das Folgerungsergebnis an die Lerndaten annähert,
   wobei für die Zugehörigkeitsfunktion eine Beschränkung festgesetzt wird und die Definitionsdaten der Zugehörigkeitsfunktion verändert werden, während die Beschränkung im Zuge der Einstellung beibehalten wird.

2. Verfahren nach Anspruch 1, wobei die Beschränkung Daten zur Bezeichnung, ob für die jeweilige Zugehörigkeitsfunktion eine Einstellung benötigt wird, darstellt.

3. Verfahren nach Anspruch 1 oder 2, wobei die Beschränkung einen geometrischen Typ der Zugehörigkeitsfunktion und/oder eine geometrische Beziehung zwischen mehreren Zugehörigkeitsfunktionen bezeichnet.

4. Verfahren nach Anspruch 3, wobei bei Vorliegen mehrerer Beschränkungen die Prioritätsreihenfolge der Beschränkungen angegeben werden kann.

5. Verfahren nach Anspruch 3, wobei eine einen geometrischen Typ bezeichnende Beschränkung einen Parameter darstellt, der eine vorbestimmte Position jedes vorbestimmten Musters des geometrischen Typs bestimmt.

6. Verfahren nach Anspruch 3, wobei eine eine geometrische Beziehung bezeichnende Beschränkung Daten darstellt, die wahlweise eine Überlagerung, eine Symmetrie und/oder eine Abfolge von Zugehörigkeitsfunktionen bestimmen.

7. Verfahren nach Anspruch 5, wobei eine Zugehörigkeitsfunktion durch Festsetzen des Wertes des Parameters definiert ist.

8. Verfahren nach Anspruch 7, wobei eine Zugehörigkeitsfunktion durch Verändern des Wertes des Parameters auf der Grundlage einer Bedingungsgleichung, die die Beschränkung mit dem Parameter darstellt, eingestellt wird.

9. Verfahren nach Anspruch 8, wobei der Parameter einen mit Daten eingegebenen unabhängigen Parameter und einen entsprechend dem unabhängigen Parameter und der Bedingungsgleichung erzeugten untergeordneten Parameter beinhaltet.

10. Verfahren nach Anspruch 8, wobei Hilfsmittel mit einem Makrobefehl eingegeben werden, der als Argument einen Namen einer Zugehörigkeitsfunktion enthält, um auf der Grundlage des Parameters den Makrobefehl in eine Bedingungsgleichung umzuwandeln.

11. Verfahren nach Anspruch 1 zur automatischen Einstellung einer Zugehörigkeitsfunktion, um unter Verwendung von Lerndaten mit einem Satz Eingangs- und Ausgangswerten eines Objekts einer Folgerung, einer Folgerungsregel und einer Zugehörigkeitsfunktion eine Fuzzyfolgerung durchzuführen und die Einstellung so zu bewirken, daß sich das Folgerungsergebnis an die Lerndaten annähert,
   wobei als Beschränkung ein geometrischer Typ einer Zugehörigkeitsfunktion festgesetzt wird, der durch die Beziehung zwischen Parametern dargestellt wird, die den Typ eines geometrischen Musters und eine vorbestimmte Position des Musters angeben, und wobei dann, wenn das Ergebnis der Folgerung auf der Grundlage der bereits festgesetzten Zugehörigkeitsfunktion über einen vorbestimmten Fehler hinausgeht, der dem Parameter zugeordnete Wert der Zugehörigkeitsfunktion geändert und eingestellt wird, während die Beschränkung beibehalten wird.

12. Vorrichtung zur automatischen Einstellung einer Zugehörigkeitsfunktion, mit einem Computersystem mit einer Eingabe-Ausgabeeinheit (203, 204, 205),
   wobei die Vorrichtung außerdem eine Eingabeeinrichtung (601) für Lerndaten mit einem Satz Eingabe- und Ausgabewerten eines Verfahrensgegenstands einer Folgerung, eine Speichereinrichtung (602) zum Speichern einer Folgerungsregel, einer initialisierten Zugehörigkeitsfunktion und einer Beschränkung für eine Einstellung der Zugehörigkeitsfunktion, eine Folgerungsausführeinrichtung (603) zum Entgegennehmen der Lerndaten, um eine Fuzzyfolgerung mit der Folgerungsregel und der Zugehörigkeitsfunktion durchzuführen, und eine Einrichtung (607) zur automatischen Einstellung einer Zugehörigkeitsfunktion, um das Ergebnis der Folgerung (Ausgabe) der Folgerungsausführeinrichtung mit einem Ausgabewert der Lerndaten zu vergleichen und die Zugehörigkeitsfunktion entsprechend der Beschränkung so einzustellen, daß der Fehler minimiert wird, wenn der Fehler über einen Bezugswert hinausgeht, beinhaltet.

13. Vorrichtung nach Anspruch 12, mit einer Einrichtung um unter Anzeige auf einem Schirm einen geometrischen Typ einer einzustellenden Zugehörigkeitsfunktion und einen Parameter für eine vorbestimmte Position des geometrischen Typs festzulegen.

14. Vorrichtung nach Anspruch 12, mit einer Anzeigeeinrichtung zum Anzeigen einer Zugehörigkeitsfunktionstabelle mit Namen von Zugehörigkeitsfunktionen und geometrischen Mustern und/oder einer Beschränkungstabelle auf der Grundlage einer Bedingungsgleichung und mit einer Anzeigesteuereinrichtung zum Festlegen und Anzeigen des Inhalts jeder Tabelle durch Eingabe mittels einer Eingabeeinrichtung und durch Hinzeigen.

15. Vorrichtung nach Anspruch 12, wobei der Fehler des Folgerungsergebnisses, das auf einer eingestellten Zugehörigkeitsfunktion beruht, wiederholt so weit eingestellt wird, daß er unter einen vorbestimmten Wert abfällt.

16. Vorrichtung nach Anspruch 12 mit einem Computersystem, das eine Zentraleinheit (201), eine Speichereinheit (202) und eine Eingabe-Ausgabeeinheit (203, 204, 205) beinhaltet, wobei

   die Speichereinheit jeweils einen Speicherbereich für eine Lerndatenspeichereinrichtung (102) zur Speicherung von Lerndaten mit einem Satz Eingabe- und Ausgabewerten für einen Verfahrensgegenstand einer Folgerung, eine Folgerungswissensspeichereinrichtung (104) zur Speicherung einer Folgerungsregel und einer Zugehörigkeitsfunktion und eine Beschränkungsspeichereinrichtung (107) zur Speicherung einer Beschränkung, die von einem Parameter angegeben wird, der den Typ eines geometrischen Musters und eine vorbestimmte Position des Musters darstellt, um die Einstellung einer Zugehörigkeitsfunktion zu steuern, beinhaltet, die Zentraleinheit (201), die Funktionen einer Vorbereitungseinrichtung zur Initialisierung der Zugehörigkeitsfunktion entsprechend der Beschränkung, eine Folgerungseinrichtung, der ein Eingabewert der Lerndaten zugeführt wird, um entsprechend der Folgerungsregel und der Zugehörigkeitsfunktion eine Fuzzyfolgerung auszuführen, und eine Einrichtung (108) zur automatischen Einstellung einer Zugehörigkeitsfunktion, um das Folgerungs-Ausgabeergebnis der Fuzzyfolgerungseinrichtung mit einem Ausgabewert der Lerndaten zu vergleichen und, wenn der Fehler über einen vorbestimmten Wert hinausgeht, den Wert des der Zugehörigkeitsfunktion entsprechenden Parameters auf der Grundlage der Beschränkung zu verändern, beinhaltet, und die Eingabe-Ausgabeeinheit eine Anzeigeeinrichtung beinhaltet, die unter Anzeige auf einem Schirm die Beschränkung und die Zugehörigkeitsfunktion festlegen kann.

17. System mit einer Einrichtung zur automatischen Einstellung einer Zugehörigkeitsfunktion nach Anspruch 16, aufweisend:

EP 0 515 209 B1

eine Fuzzyfolgerungseinrichtung (601) zum Aufgreifen von Eingabedaten für einen Verfahrensgegenstand und zur Durchführung einer Fuzzyfolgerung für eine Verfahrensvorhersage auf der Grundlage einer Zugehörigkeitsfunktion und einer gespeicherten Folgerungsregel, eine weitere Vorhersageeinrichtung (608) zur Erstellung einer Verfahrensvorhersage aus den Eingabedaten ohne Fuzzyfolgerung, eine Ausgabedatenumschalteinrichtung (604) zur Erzeugung eines Fuzzyfolgerungsergebnisses, wenn dieses Folgerungsergebnis ein vorbestimmtes Niveau erreicht, und des Vorhersageergebnisses der anderen Vorhersageeinrichtung, wenn das genannte Folgerungsergebenis das vorbestimmte Niveau nicht erreicht, und eine Lerndatenspeichereinrichtung (606) zum Sammeln des Vorhersageergebnisses sowie von Verfahrenseingabedaten eines bestimmten Zeitpunkts als Satz von Eingabedaten, wenn das Vorhersageergebnis der anderen Vorhersageeinrichtung ausgegeben wird;
wobei das System außerdem eine Beschränkungsspeichereinrichtung (606) zum Speichern einer Beschränkung zur Beibehaltung des Typs der Zugehörigkeitsfunktion während der Einstellung sowie eine Einrichtung (607) zur automatischen Einstellung einer Zugehörigkeitsfunktion, um Daten über die Zugehörigkeitsfunktion entsprechend der Beschränkung so einzustellen, daß der Fehler zwischen dem Folgerungsergebnis der Fuzzyfolgerungseinrichtung und den Lerndaten minimiert wird, wenn die Eingabe der Fuzzyfolgerung durch eine Eingabedatenumschalteinrichtung (601) von den Verfahrensdaten auf die Lerndaten umgeschaltet wird, beinhaltet.

## Revendications

1. Un procédé de régulation automatique de la fonction d'appartenance pour effectuer une inférence floue par utilisation de données d'apprentissage comprenant un jeu de valeurs d'entrée et de sortie d'un objet d'inférence, une règle d'inférence et une fonction d'appartenance et pour effectuer une régulation de manière que le résultat de l'inférence s'approche des données d'apprentissage,
dans lequel une contrainte de ladite fonction d'appartenance est établie et les données de définition de ladite fonction d'appartenance sont modifiées tout en conservant la contrainte pendant la régulation.

2. Un procédé de régulation de la fonction d'appartenance selon la revendication 1, dans lequel ladite contrainte est une donnée destinée à désigner le fait que la régulation soit nécessaire pour chaque fonction d'appartenance.

3. Un procédé de régulation de la fonction d'appartenance selon la revendication 1 ou 2, dans lequel ladite contrainte désigne un style géométrique de ladite fonction d'appartenance et/ou une corrélation géométrique entre une pluralité de fonctions d'appartenance.

4. Un procédé de régulation de la fonction d'appartenance selon la revendication 3, dans lequel sont prévues une pluralité de contraintes, l'ordre de priorité parmi lesdites contraintes pouvant être désigné.

5. Un procédé de régulation de la fonction d'appartenance selon la revendication 3, dans lequel une contrainte spécifiant un style géométrique est un paramètre désignant une position prédéterminée pour chaque motif prédéterminé du style géométrique.

6. Un procédé de régulation de la fonction d'appartenance selon la revendication 3, dans lequel une contrainte spécifiant une corrélation géométrique est une donnée désignant au moins l'une, sélectionnée, parmi les fonctions de superposition, symétrie et séquencement des fonctions d'appartenance.

7. Un procédé de régulation de la fonction d'appartenance selon la revendication 5, dans lequel une fonction d'appartenance est définie par fixation de la valeur dudit paramètre.

8. Un procédé de régulation de la fonction d'appartenance selon la revendication 7, dans lequel une fonction d'appartenance est régulée en modifiant la valeur dudit paramètre sur la base d'une équation conditionnelle représentant ladite contrainte avec ledit paramètre.

9. Un procédé de régulation de la fonction d'appartenance selon la revendication 8, dans lequel ledit paramètre comprend un paramètre indépendant introduit avec des données et un paramètre subordonné généré selon ledit paramètre indépendant et ladite équation conditionnelle.

10. Un procédé régulation de la fonction d'appartenance selon la revendication 8, comprenant des moyens introduits

15

avec une macroinstruction avec un nom de fonction d'appartenance à titre d'arguments, pour convertir ladite macroinstruction en une équation conditionnelle basée sur ledit paramètre.

11. Un procédé régulation de fonction automatique d'appartenance pour exécuter une inférence logique selon la revendication 1, par utilisation de données d'apprentissage, ayant un jeu de valeurs d'entrée et de sortie d'un objet d'inférence, une règle d'inférence et une fonction d'appartenance et effectuant la régulation d'une manière faisant que le résultat de l'inférence s'approche des données d'apprentissage,

dans lequel un style géométrique d'une fonction d'appartenance représentée par la corrélation entre les paramètres indiquant le type d'un motif géométrique et une position prédéterminée dudit motif est fixé à titre de contrainte et, lorsque le résultat de l'inférence basé sur la fonction d'appartenance déjà fixée dépasse une erreur prédéterminée, la valeur de ladite fonction d'appartenance associée audit paramètre est modifiée et régulée tout en maintenant ladite contrainte.

12. Un dispositif de régulation automatique de la fonction d'appartenance comprenant un système d'ordinateur comprenant une unité d'entrée-sortie (203, 204, 205),

ledit dispositif comprenant en outre des moyens d'entrée (601) pour des données d'apprentissage, comprenant un jeu de valeurs d'entrée et de sortie d'un processus d'inférence objet, des moyens mémoire (602) destinés à mémoriser une règle d'inférence, une fonction d'appartenance initialisée et une contrainte pour réguler ladite fonction d'appartenance, des moyens d'exécution d'inférence (603) recevant lesdites données d'apprentissage pour exécuter une inférence floue avec ladite règle d'inférence et ladite fonction d'appartenance et des moyens de régulation automatiques de fonction d'appartenance (607) destinés à comparer le résultat de l'inférence (sortie) desdits moyens d'exécution d'inférence à une valeur de sortie desdites données d'apprentissage et réguler la fonction d'appartenance de manière correspondante à ladite contrainte, d'une manière faisant que l'erreur est minimisée si ladite erreur dépasse une valeur de référence.

13. Un dispositif de régulation automatique de la fonction d'appartenance selon la revendication 12, comprenant en outre des moyens de fixation tout en affichant sur l'écran un style géométrique d'une fonction d'appartenance devant être régulée et un paramètre concernant une position prédéterminée dudit style géométrique.

14. Un dispositif de régulation de la fonction d'appartenance selon la revendication 12, comprenant en outre des moyens d'affichage conçus pour afficher une table de fonction d'appartenance comprenant des noms de fonctions d'appartenance et des motifs géométriques, et/ou une table de contraintes basée sur une équation conditionnelle, et des moyens de commande d'affichage pour fixer et afficher les contenus de chaque table en entrant depuis les moyens d'entrée et en pointant.

15. Un dispositif de régulation de la fonction d'appartenance selon la revendication 12, dans lequel l'erreur du résultat d'inférence basé sur une fonction d'appartenance ayant été régulée est régulée répétitivement en une ampleur permettant de descendre au-dessous d'une valeur prédéterminée.

16. Un dispositif de régulation automatique de la fonction d'appartenance selon la revendication 12, ledit dispositif comprenant un système d'ordinateur comprenant une unité de traitement centrale (201), une unité mémoire (202), et une unité entrée-sortie (203, 204, 205), dans lequel :

ladite unité mémoire comprend une aire de stockage destinée à chacun desdits moyens de mémoire de données d'apprentissage (102) pour mémoriser des données d'apprentissage ayant un jeu de valeur d'entrée et de sortie sur un processus d'inférence objet, des moyens de mémoire de connaissance d'inférence (104) pour mémoriser une règle d'inférence et une fonction d'appartenance, et des moyens mémoire de contrainte (107) pour mémoriser une contrainte indiquée par un paramètre représentant le type d'un motif géométrique et une position prédéterminée dudit motif pour contrôler la régulation de la fonction d'appartenance,

ladite unité de traitement central (201) comprend les fonctions des moyens de prétraitement pour initialiser la fonction de l'appartenance selon ladite contrainte, des moyens d'inférence floue alimentée avec une valeur d'entrée desdites données d'apprentissage pour exécuter l'inférence floue selon ladite règle d'inférence et ladite fonction d'appartenance, et des moyens de régulation automatique de fonction d'appartenance (108) pour comparer le résultat d'inférence (sortie) desdits moyens d'inférence floue à une valeur de sortie desdites données d'apprentissage lorsque l'erreur dépasse une valeur prédéterminée, modifier la valeur dudit paramètre correspondant à ladite fonction d'appartenance sur la base de ladite contrainte,

ladite unité d'entrée-sortie comprend des moyens d'affichage capables de fixation tout en affichant sur l'écran ladite contrainte et lesdites fonctions d'appartenance.

**17.** Un système d'inférence floue comprenant des moyens pour réguler automatiquement une fonction d'appartenance selon la revendication 16, ledit système comprenant:

des moyens d'inférence floue (601) destinés à extraire des données d'entrée d'un processus objet et effectuer une inférence floue d'une prédiction de processus sur la base d'une fonction d'appartenance et d'une règle d'inférence stockée dont un autre moyen de prédiction (608) destiné à traiter une prédiction de processus à partie de ladite donnée d'entrée sans inférence floue, des moyens de commutation de données de sortie (604) pour produire un résultat d'inférence floue lorsque ledit résultat d'inférence satisfait à un niveau prédéterminé, et le résultat de la prédiction desdits autres moyens de prédiction lorsque ladite inférence floue ne satisfait pas audit niveau prédéterminé, et des moyens mémoire de données d'apprentissage (606) destinés à accumuler le résultat de prédiction et des données d'entrée de processus à titre de moment temporel particulier d'un jeu de données entrées lorsque le résultat de prédiction dudit autre moyen de prédiction est émis;

ledit système comprenant en outre des moyens mémoire de contrainte (606) destinés à mémoriser une contrainte pour maintenir le style de ladite fonction d'appartenance sous l'effet d'une régulation et des moyens de régulation automatique de fonction d'appartenance (607) pour réguler des données sur ladite fonction d'appartenance en fonction de ladite contrainte d'une manière permettant de minimiser l'erreur entre le résultat d'inférence desdits moyens d'inférence floue et lesdite données d'apprentissage lorsque l'entrée de ladite inférence floue est commutée desdites données de processus auxdites données d'apprentissage, par les moyens de commutation de données d'entrée (601).

# FIG. 1

**101** TEACHER DATA INPUT MEANS

**102** TEACHER DATA MEMORY MEANS

**108** MEMBERSHIP FUNCTION REGULATION MEANS

**105** CONSTRAINT INPUT MEANS

**106** CONSTRAINT CONVERSION MEANS

**107** CONSTRAINT MEMORY MEANS

**103** INFERENCE KNOWLEDGE INPUT MEANS

**104** INFERENCE KNOWLEDGE MEMORY MEANS

MEMBERSHIP FUNCTION AUTOMATIC REGULATION DEVICE

**109**

EP 0 515 209 B1

# FIG. 2

Central processing unit (201) containing:
- CONSTRAINT CONVERSION MEANS — 106
- TEACHER DATA INPUT CONTROL MEANS — 101-2
- MEMBERSHIP FUNCTION REGULATION MEANS — 108
- CONSTRAINT INPUT CONTROL MEANS — 105-2
- INFERENCE KNOWLEDGE INPUT CONTROL MEANS — 103-2

Memory (202) containing:
- CONSTRAINT MEMORY MEANS — 107
- TEACHER DATA MEMORY MEANS — 102
- INFERENCE KNOWLEDGE MEMORY MEANS — 104

203, KEYBOARD 204, DISPLAY UNIT 205

EP 0 515 209 B1

# FIG. 3

INPUT SIGNAL

CONDITION VARIABLE INPUT SECTION

301

302

CONSTANT GENERATION SECTION

303-1
303-2

303-2N

304
OPERATION NEURON SECTION FOR CONDITION SECTION MEMBERSHIP VALUE

305 OPERATION NEURON SECTION FOR CONDITION SECTION GRADE

306 OPERATION NEURON SECTION FOR CONCLUSION SECTION

307-1

307-M

308a ARITH-METIC UNIT

308b ADDER

308c DIVIDER

308 NON-FUZZY SECTION

309 ERROR OPERATION SECTION

TEACHER SIGNAL

OUTPUT SIGNAL

303-1 ~ 303-2N : CONDITION SECTION SYNAPSE LOAD

307-1 ~ 307-M : CONCLUSION SECTION SYNAPSE LOAD

EP 0 515 209 B1

20

# FIG. 4

MEMBERSHIP
FUNCTION F

MEMBERSHIP
FUNCTION G

# FIG. 5

| NO. | TEMP. | PRESSURE | CONTROL AMOUNT |
|---|---|---|---|
| 1 | 30 | 1.2 | −2 |
| 2 | 20 | 1.0 | 0 |
| 3 | 10 | 0.8 | +2 |
| | | | |

# FIG. 6

| NO. | TEMP. | PRESSURE | CONTROL AMOUNT |
|---|---|---|---|
| 1 | HIGH | HIGH | DECREASE |
| 2 | MEDIUM | MEDIUM | MAINTAIN |
| 3 | LOW | LOW | INCREASE |
| | | | |

# FIG. 7A

DECREMENTAL TYPE

MEMBERSHIP FUNCTION $F_a$

$p1(F_a)$    $p2(F_a)$

# FIG. 7B

INCREMENTAL TYPE

MEMBERSHIP FUNCTION $F_b$

$p1(F_b)$    $p2(F_b)$

# FIG. 7C

TRIANGULAR TYPE

MEMBERSHIP FUNCTION $F_c$

$p1(F_c)$   $p2(F_c)$   $p3(F_c)$

# FIG. 7D

TRAPEZOIDAL TYPE

MEMBERSHIP FUNCTION $F_d$

$p1(F_d)$  $p2(F_d)$  $p3(F_d)$   $p4(F_d)$

EP 0 515 209 B1

FIG.8

| SUBJECT RANGE | MEMBERSHIP FUNCTION | | SUBORDI-NATION | PARAMETER POSITION | PARAMETER ATTRIBUTE | CONSTRAINT EQUATION |
|---|---|---|---|---|---|---|
| 0～50<br>TEMP. | LOW | DECRE-MENTAL TYPE | 0 | 1 | INDEPENDENT | ———— |
| | | | | 2 | INDEPENDENT | ———— |
| | | | | 3 | | |
| | | | | 4 | | |
| | HIGH | INCREMENTAL TYPE | 1 | 1 | SUBORDINATE | $= 20*2 - p2(\text{TEMP. LOW})$ |
| | | | | 2 | SUBORDINATE | $= 20*2 - p1(\text{TEMP. LOW})$ |
| | | | | 3 | | |
| | | | | 4 | | |
| | MEDIUM | TRIANGULAR | 0 | 1 | INDEPENDENT | $\geqq 10$ |
| | | | | 2 | UNREGULA TABLE | $= 20$ |
| | | | | 3 | SELF-SUBORDINATE | $= p2(\text{TEMP. MEDIUM})*2 - p1(\text{TEMP. MEDIUM})$ |
| | | | | 4 | | |
| | SUBSTAN-TIALLY MEDIUM | TRAPE-ZOIDAL | 2 | 1 | INDEPENDENT | $\leqq p2(\text{TEMP. LOW})$ |
| | | | | 2 | INDEPENDENT | ———— |
| | | | | 3 | INDEPENDENT | ———— |
| | | | | 4 | INDEPENDENT | $\geqq p1(\text{TEMP. HIGH})$ |

EP 0 515 209 B1

# FIG. 9A

INITIALIZED MEMBERSHIP FUNCTION

# FIG. 9B

MEMBERSHIP FUNCTION TABLE
(IMMEDIATELY AFTER INPUT)

| MEMBERSHIP FUNCTION | | | FIRST PARAM-ETER | SECOND PARAM-ETER | THIRD PARAM-ETER | FOURTH PARAM-ETER |
|---|---|---|---|---|---|---|
| TEMP. | LOW | DECREMENTAL TYPE | 5 | 15 | | |
| | HIGH | ——— | ——— | ——— | ——— | ——— |
| | MEDIUM | TRIANGULAR | 15 | 20 | 30 | |
| | SUBSTANTIALLY MEDIUM | ——— | ——— | ——— | ——— | ——— |
| | | | ≈ | ≈ | ≈ | ≈ |

25

# FIG. 9C

REGULATION PARAMETER TABLE

| | | | |
|---|---|---|---|
| TEMP. | LOW | FIRST PARAMETER | 5 |
| | | SECOND PARAMETER | 15 |
| | MEDIUM | FIRST PARAMETER | 15 |
| | SUBSTANTIALLY MEDIUM | FIRST PARAMETER | — |
| | | SECOND PARAMETER | — |
| | | THIRD PARAMETER | — |
| | | FOURTH PARAMETER | — |
| ≈ | ≈ | ≈ | ≈ ≈ |

# FIG. 9D

MEMBERSHIP FUNCTION TABLE
(IMMEDIATELY AFTER SETTING)

| MEMBERSHIP FUNCTION | | | FIRST PARAM-ETER | SECOND PARAM-ETER | THIRD PARAM-ETER | FOURTH PARAM-ETER |
|---|---|---|---|---|---|---|
| TEMP. | LOW | DECREMENTAL TYPE | 5 | 15 | | |
| | HIGH | INCREMENTAL TYPE | 25 | 35 | | |
| | MEDIUM | TRIANGULAR | 15 | 20 | 25 | |
| | SUBSTANTIALLY MEDIUM | TRAPEZOIDAL | 10 | 16 | 20 | 26 |
| | | | ≈ | ≈ | ≈ | ≈ ≈ |

# F I G. IOA

START

INPUT END DECISION CONDITION ——401

PREPARE REGULATION
PARAMETER TABLE ——402

SET MEMBERSHIP FUNCTION ——403

PREPARE AS MANY NEW
REGULATION PARAMETER TABLE ——404
AS INDEPENDENT PARAMETERS

EXECUTE FUZZY INFERENCE FOR
EACH REGULATION PARAMETER
TABLE AND CALCULATE SQUARE ——405
ERROR SUM (W AS LARGE TABLE
FOR ERROR SUM)

PREPARE AVERAGE TABLE G FROM
REGULATION PARAMETER TABLE ——406

· PREPARE TABLE R ON THE OPPOSITE
SIDE TO W WITH G AT CENTER,
REPEAT PREPARATIONS OF R ——407
UNTIL MATCHING REQUIREMENT
IS MET
· CALCULATE SQUARE ERROR SUM
FOR R
· REMOVE W AND FETCH R

408

END DECISION CONDITION ? ——YES—— END

NO

## FIG. IOB

ENTER

SUBORDINATE LEVEL i ← 0 ~ 411

FETCH UNCHECKED MEMBERSHIP FUNCTION OF SUBORDINATE LEVEL i ~ 412

413 ~ FETCHING SUCCEEDS ? — NO → ALL MEMBERSHIP FUNCTION COMPLETELY CHECKED ? ~ 414 — NO → i ← i + 1 ~ 415

414 → YES → EXIT

413 → YES

416 ~ SET SUBORDINATE PARAMETER, IF ANY

·SET INDEPENDENT PARAMETER. GENERATE RAMDOM NUMBER WITHIN THE RANGE OF A CONSTRAINT AND DETERMINE THE VALUE, IF UNDEFINED, OF REGULATION PARAMETER TABLE ~ 417

SET SELF-SUBORDINATE PRAMETER, IF ANY ~ 418

419 ~ MATCHING CHECK OK ? — NO → CORRECTION OF SUBORDINATE PARAMETER NECESSARY ? — NO → CHANGE INDEPENDENT PARAMETER WITH RANDOM NUMBER WITHIN THE RANGE OF CONSTRAINT ~ 421

419 → YES

420

420 → YES → ·RETURN TO DESTINATION MEMBERSHIP FUNCTION AND CORRECT INDEPENDENT PARAMETER ·RECHECK RELATED PARAMETERS ~ 422

# FIG. 11A

EP 0 515 209 B1

501 MEMBERSHIP FUNCTION LIST

**SUBJECT NAME : TEMPERATURE**

| ON / OFF | PREDICATE | PATTERN | RATIO |
|---|---|---|---|
| ON | LOW | DECREMENTAL TYPE | ———— |
| ON | HIGH | INCREMENTAL TYPE | ———— |
| ON | MEDIUM | TRIANGULAR | 1 : 1 |
| ON | SUBSTANTIALLY MEDIUM | TRAPEZOIDAL | |

| CONNECT AREAS | $\leqq$ |
|---|---|
| SEPARATE AREAS | $<$ |
| INCLUDE AREAS | $\subseteqq$ |
| LINEAR SYMMETRY | $|$ |
| SHIFT | → |

| NO. | CONSTRAINT |
|---|---|
| 1 | RANGE (LOW) $\leqq$ RANGE (SUBSTANTIALLY MEDIUM) |
| 2 | RANGE (SUBSTANTIALLY MEDIUM) $\leqq$ RANGE (HIGH) |
| 3 | (LOW | HIGH) 20 |
| | |

| INDICATE IN DETAIL |
|---|
| DELECT CONSTRAINTS |

502 OPERATION COMMAND

503 MEMBERSHIP FUNCTION CONSTRAINT LIST

500 CONSTRAINT PREPARATION SCREEN

# F I G. IIB

MEMBERSHIP FUNCTION : TEMP. MEDIUM

REGULATION DESIGNATION 5I2 COMMAND

| REGULATION |
| --- |
| NO - REGULATION |

| PARAMETER NO. | PRESENT VALUE | UPPER LIMIT | LOWER LIMIT |
| --- | --- | --- | --- |
| I | I5 | IO | 20 |
| 2 | 20 | ——— | ——— |
| 3 | 30 | | |

5II MEMBERSHIP FUNCTION DISPLAY AREA

5I3 PARAMETER CONSTRAINT LIST

5I0 CONSTRAINT PREPARATION SCREEN 2

EP 0 515 209 B1

# FIG. 12

609

OUTPUT VALUE
PROCESSING MEANS
BY RECURSION MODEL

601

DATA INPUT
MEANS (INPUT
SWITCHING MEANS)

603

FUZZY
INFERENCE
EXECUTION
MEANS

604

DATA OUTPUT
MEANS (OUTPUT
SWITCHING MEANS)

608~

SUPERVISOR

PROCESS
INPUT
DATA

PROCESS
OUTPUT
DATA

INFERENCE
KNOWLEDGE
MEMORY
MEANS

~602

TEACHER DATA
MEMORY MEANS

MEMBERSHIP
FUNCTION
AUTOMATIC
REGULATION
MEANS

607

606

FUZZY INFERENCE SYSTEM

605